# EUROPÄISCHE PATENTSCHRIFT

(11) **EP 2 550 197 B1**
(45) Veröffentlichungstag und Bekanntmachung des Hinweises auf die Patenterteilung: **30.08.2017**
(21) Anmeldenummer: 11714637.3
(22) Anmeldetag: 23.03.2011
(51) Int. Cl.: B63H 25/38, B63H 25/52, B63B 3/40

(54) **RUDER FÜR SCHIFFE**
RUDDER FOR A BOAT
GOUVERNAIL DE BATEAU

(30) Priorität: 23.03.2010 DE 202010004191 U
(43) Veröffentlichungstag der Anmeldung: 30.01.2013
(73) Patentinhaber: Van Der Velden Barkemeyer GmbH, 21509 Glinde (DE)
(72) Erfinder: SCHINDLER, Henry, 19061 Schwerin (DE); MEYER, Thomas, 22147 Hamburg (DE); MÜLLER, Karsten, 26127 Oldenburg (DE); BEHRENDT, Christoph, 27299 Langwedel (DE); DZEWAS, Johannes, 22145 Hamburg (DE); OTTO, Brigitte, 22958 Kuddewörde (DE); XU, Nan, 21465 Reinbek (DE); HERBST, Frank, 18059 Pölchow (DE)
(74) Vertreter: Maikowski & Ninnemann Patentanwälte Partnerschaft mbB
(86) Internationale Anmeldenummer: PCT/EP2011/054452
(87) Internationale Veröffentlichungsnummer: WO 2011/117301

(56) Entgegenhaltungen:
- DE-U1-202005 019 626
- GB-A- 2 192 949
- JP-A- H06 193 629
- US-A- 4 809 631

## Beschreibung

Die Erfindung betrifft ein Ruder für Schiffe nach dem Oberbegriff des Anspruchs 1.

Ein derartiges Ruder weist einen um eine Drehachse verschwenkbar an einem Schiffsrumpf angeordneten Ruderschaft und ein mit dem Ruderschaft verbundenes, um die Drehachse zum Schiffsrumpf verschwenkbares Ruderblatt auf. Durch Verdrehen des Ruderschaftes kann das Ruderblatt relativ zum Schiffsrumpf verstellt werden, um das Ruder zu stellen und den Kurs eines Schiffes zu beeinflussen.

Die beweglichen Teile des Ruders, nämlich der Ruderschaft und/oder das Ruderblatt, sind über mindestens ein Lager am Schiffsrumpf gelagert. Denkbar sind hierbei Ruder, bei denen ausschließlich der Ruderschaft, ausschließlich das Ruderblatt oder sowohl der Ruderschaft als auch das Ruderblatt über Lager am Schiffsrumpf abgestützt sind. Die Lager weisen hierzu einen Innenlagerabschnitt und einen gleitend am Innenlagerabschnitt anliegenden Außenlagerabschnitt auf, die über Lagerflächen eine gleitende Lagerung der Teile aneinander bereitstellen.

Einer der Lagerabschnitte kann dabei aus einem vergleichsweise harten Material ausgebildet sein (beispielsweise der Innenlagerabschnitt, der durch den beispielsweise aus hochfestem Schmiedestahl hergestellten Ruderschaft selbst verwirklicht sein kann, wobei auch möglich ist, den Ruderschaft zusätzlich zu beschichten) und der andere aus einem vergleichsweise weichen Material, beispielsweise Bronze oder Kunststoff. Beispielsweise kann eine als Außenlagerabschnitt dienende Lagerbuchse aus Bronze oder Kunststoff hergestellt sein.

Aufgrund der Größe und des Gewichts von Ruderblatt und Ruderschaft insbesondere bei großen Schiffen sind die Lagerteile, insbesondere ein aus einem weichen Material hergestellter Lagerabschnitt (z.B. der Außenlagerabschnitt), im Betrieb großen Beanspruchungen ausgesetzt, so dass ein Verschleiß über die Lebensdauer eines Ruders nicht zu vermeiden ist, der zu einem Abrieb am Außenlagerabschnitt (und/oder Innenlagerabschnitt) führen kann und ein nicht zu vermeidendes Spiel (auch bezeichnet als Halslagerspiel) zwischen Ruderblatt und Ruderschaft einerseits und den lagernden Teilen des Schiffsrumpfes andererseits beeinflusst.

Um den Verschleiß der Lager des Ruders zu bestimmen, kann das Halslagerspiel gemessen werden. Herkömmlich ist hierzu erforderlich, das Ruder eines Schiffes in einem Trockendock zu untersuchen, beispielsweise indem durch seitliches Verkippen des Ruderblattes das Spiel ermittelt wird. Solche Untersuchungen sind aufwendig und insbesondere nicht im Betrieb eines Schiffes möglich. So kann ein übermäßiger Verschleiß oder gar eine Zerstörung eines Lagers bei Fahrt eines Schiffes nicht oder nur indirekt anhand einer Fehlfunktion des Ruders erkannt werden.

Bei einer aus der DE 20 2005 019 626 U1 bekannten Vorrichtung zum Kontrollieren und Messen des Halslagerspiels zwischen einem Außenlager am Ruderschaft eines Ruders und einem Innenlager an einem Ruderkokerwird eine Handhabe verwendet, die eine in einen Spalt zwischen Außenlager und Innenlager einführbare Messschiene aufweist, über die die Breite des Spiels zwischen dem Außenlager und dem Innenlager ermittelt werden kann. Mittels der Handhabe können Messungen des Halslagerspiels auch von Tauchern unter Wasser durchgeführt werden, so dass ein zu untersuchendes Schiff nicht in ein Trockendock verlegt werden muss, um das Halslagerspiel eines Ruders zu bestimmen. Nachteilig bei dieser Vorrichtung ist jedoch, dass die Handhabe gegebenenfalls umständlich zu handhaben ist und der Spalt zwischen Außenlager und Innenlager nicht unbedingt frei zugänglich ist, um die Handhabe in geeigneter Weise zur Spielmessung in den Spalt zwischen Außenlager und Innenlager einzuführen.

Die GB 2 192 949 A beschreibt ein Lager z.B. für einen Propellerschaft eines Schiffes, bei dem innerhalb eines Lagermaterials Verschleißdetektoren angeordnet sind. Diese Verschleißdetektoren sind in dem Lagermaterial eingebettet und in unterschiedlichen Tiefen angeordnet. Die Verschleißdetektoren sind mit elektrischen Leitungen verbunden und kommen, bei Verschleiß des Lagers, mit Wasser in Verbindung, sodass elektrische Ströme übertragen werden. Anhand eines in einer bestimmten Tiefe gelegenen Verschleißdetektors und eines an diesem Verschleißdetektor generierten Signals kann somit darauf geschlossen werden, dass ein Verschleiß bis zu einer bestimmten Tiefe vorliegt.

Bei einem in der JP 06193629 A beschriebenen Lager sind innerhalb eines Isolators resistive Dünnfilmkörper in einen vorbestimmten Abschnitt zueinander angeordnet, um einen Verschleißsensor auszubilden. Der Verschleißsensor ist in einem Lager eingebettet und erfährt somit im Gebrauch des Lagers einen Verschleiß. Anhand eines über die parallel zueinander geschalteten resistiven Dünnfilmkörper ermittelten Widerstands kann auf den Verschleiß des Lagers geschlossen werden.

Der vorliegenden Erfindung liegt die Aufgabe zugrunde, ein Ruder für Schiffe zu schaffen, das es auf einfache und kostengünstige Weise ermöglicht, den Verschleiß von Lagern zur Lagerung eines Ruderblattes oder Ruderschaftes an einem Schiffsrumpf zu bestimmen.

Diese Aufgabe wird durch einen Gegenstand mit den Merkmalen des Anspruchs 1 gelöst.

Demgemäß ist bei einem Ruder für Schiffe ein Verschleißstift vorgesehen, der an einem von Außenlagerabschnitt und Innenlagerabschnitt angeordnet ist und gleitend an dem anderen von Innenlagerabschnitt und Außenlagerabschnitt anliegt

Die vorliegende Erfindung geht von dem Gedanken aus, an dem Außenlagerabschnitt (und/oder Innenlagerabschnitt) einen Verschleißstift anzuordnen, der dazu geeignet ist, den Verschleiß des Lagers anzuzeigen. Dazu liegt der Verschleißstift genauso wie der Außenlagerabschnitt (oder der Innenlagerabschnitt) an dem Innenlagerabschnitt (bzw. dem Außenlagerabschnitt) gleitend an und unterliegt damit im Betrieb des Ruders denselben Beanspruchungen und demselben Verschleiß wie der Außenlagerabschnitt (bzw. der Innenlagerabschnitt). Durch Inspektion des Verschleißstiftes kann dann auf den Verschleiß des Lagers zurückgeschlossen werden, insbesondere ein Abrieb bestimmt werden und die Funktionstüchtigkeit des Lagers überprüft werden.

Der Verschleißstift ist vorteilhafterweise an einem Lagerabschnitt angeordnet, der aus einem im Vergleich zum anderen Lagerabschnitt weichen Material (beispielsweise Bronze oder Kunststoff) ausgebildet ist, beispielsweise dem Außenlagerabschnitt. Die Anordnung am Außenlagerabschnitt hat zudem den Vorteil, dass der Verschleißstift zum Zwecke der Inspektion leichter zugänglich ist.

Nachfolgend wird die vorteilhafte Funktion und Wirkung mit Blick auf einen am Außenlagerabschnitt angeordneten Verschleißstift beschrieben, wobei das Geschilderte analog auch auf einen am Innenlagerabschnitt angeordneten Verschleißstift übertragbar ist.

Der am Außenlagerabschnitt angeordnete Verschleißstift kann eine Gleitfläche aufweisen, über die er gleitend an dem Innenlagerabschnitt anliegt. Dazu kann der Verschleißstift an seinem dem Innenlagerabschnitt zugewandten Ende einen Abschnitt aufweisen, der aus dem gleichen Material wie der Außenlagerabschnitt oder aus einem zumindest in seinen Materialeigenschaften dem Material des Außenlagerabschnitts ähnlichen Material besteht. Der Verschleißstift steht damit in gleicher Wirkverbindung mit dem Innenlagerabschnitt wie der Außenlagerabschnitt und besteht zudem aus dem gleichen oder zumindest einem ähnlichen Material, so dass der Verschleißstift mit Hinblick auf den Verschleiß sich dem Außenlagerabschnitt im Wesentlichen gleich verhält und damit der Verschleiß des Verschleißstiftes auf den Verschleiß des Außenlagerabschnitts hindeuten kann.

Um den Zustand des Verschleißstiftes inspizieren zu können, ist der Verschleißstift lösbar an dem Außenlagerabschnitt angeordnet. Dazu ist der Verschleißstift in eine Bohrung des Außenlagerabschnitts eingeschraubt. Ist der Verschleißstift von der Außenseite des Lagers, beispielsweise von der Außenseite eines mit dem Schiffsrumpf verbundenen Ruderkokers oder von der Außenseite des Ruderblattes her zugänglich, so kann der Verschleißstift beispielsweise von einem Taucher von dem Ruderblatt entnommen werden und auf seine Verschleißspuren hin untersucht werden, um auf diese Weise auf den Zustand des Lagers zurückzuschließen. Am Ruderblatt kann hierfür beispielsweise eine entsprechende Klappe für einen Zugriff auf die entsprechenden Lagerabschnitte vorgesehen sein, oder der Verschleißstift kann auch die Außenwand des Ruderblattes durchdringen und somit von außen aus seiner entsprechenden Halterung geschraubt oder auf sonstige Weise gelöst werden.

In einer Weiterbildung können an dem Verschleißstift im Bereich seines dem Innenlagerabschnitt zugewandten Endes auch eine oder mehrere elektrisch leitfähige Schichten zur (elektrischen) Messung des Verschleißes des Verschleißstiftes angebracht sein. Durch den Verschleiß des Verschleißstiftes infolge eines Abriebs kann sich auf diese Weise beispielsweise der Widerstand dieser elektrisch leitfähigen Schichten verändern, so dass durch eine einfache Widerstandsmessung auf den Abrieb des Verschleißstiftes zurückgeschlossen werden kann. Denkbar sind in diesem Zusammenhang auch andere elektrische Messanordnungen, die beispielsweise durch kapazitive oder induktive Messung auf den Zustand des Verschleißstiftes schließen lassen.

Denkbar ist, an jedem Lager genau einen Verschleißstift zum Ermitteln des Verschleißes des Lagers anzuordnen. Denkbar ist aber auch, an charakteristischen Punkten eines Lagers jeweils einen Verschleißstift vorzusehen, so dass jedes Lager mehrere Verschleißstifte aufweist, die zum Prüfen der Funktionstauglichkeit des Lagers inspiziert werden können. Auf diese Weise kann der Verschleiß eines Lagers in exakter Weise auch ortsausgelöst überwacht werden, um auf diese Weise eine genauere Aussage über den Zustand eines Lagers zu erhalten.

Das mindestens eine Lager kann als Gleitlager ausgebildet sein, das ausschließlich radiale Kräfte aufnimmt, also keine axiale Führung in Richtung der Längserstreckungsrichtung des Ruderschaftes bereitstellt.

In vorteilhafter Ausgestaltung ist am Schiffsrumpf ein Ruderkoker ausgebildet, der mit einem nach Art eines Kragträgers vom Schiffsrumpf vorstehenden Kokerrohr in eine Aussparung des Ruderblattes eingreift und in einer zentralen inneren Bohrung den Ruderschaft führt. Mit einem solchen Ruderkoker kann eine vorteilhafte Lagerung des Ruderblattes am Schiffsrumpf erreicht werden.

Unterschiedliche Varianten der Lagerung sind denkbar. Beispielsweise kann ein Lager zwischen einem feststehenden Abschnitt des Schiffsrumpfs (beispielsweise dem Kokerrohr) und dem Ruderschaft angeordnet sein. In diesem Fall ist der Innenlagerabschnitt mit dem Ruderschaft und der Außenlagerabschnitt mit dem feststehenden Abschnitt des Schiffsrumpfes (beispielsweise dem Kokerrohr) verbunden, um den Ruderschaft gleitend an dem feststehenden Abschnitt des Schiffsrumpfes zu lagern.

In anderer Ausgestaltung ist auch denkbar, dass ein Lager zwischen dem Ruderblatt und einem feststehenden Abschnitt des Schiffsrumpfs (beispielsweise dem Kokerrohr) angeordnet ist. In diesem Fall ist der Innenlagerabschnitt mit dem feststehenden Abschnitt des Schiffsrumpfes (beispielsweise dem Kokerrohr) und der Außenlagerabschnitt mit dem Ruderblatt verbunden, um das Ruderblatt an dem feststehenden Abschnitt des Schiffsrumpfes zu lagern.

In jedem Fall können mehrere Lager zwischen Ruderschaft und Schiffsrumpf und/oder zwischen Ruderblatt und Schiffsrumpf verwendet werden, wobei solche Lager auch in Kombination verwendet werden können, also sowohl Lager zwischen Schiffsrumpf und Ruderschaft als auch zwischen Schiffsrumpf und Ruderblatt vorgesehen sein können.

Der der Erfindung zugrunde liegende Gedanke soll nachfolgend anhand der in den Figuren dargestellten Ausführungsbeispiele näher erläutert werden. Es zeigen:
- Fig. 1: eine schematische Darstellung eines Ruders eines Schiffes;
- Fig. 2: eine teilweise freigeschnittene Darstellung eines Ausführungsbeispiels eines Ruders eines Schiffes;
- Fig.3: eine teilweise freigeschnittene Darstellung eines weiteren Ausführungsbeispiels eines Ruders eines Schiffes, umfassend einen Ruderkoker;
- Fig.4: eine schematische, teilweise geschnittene Ansicht der Lagerung eines Ruderschafts an einem Ruderkoker eines Schiffsrumpfs;
- Fig. 5: eine vergrößerte Schnittansicht eines Verschleißstifts an einem Außenlagerabschnitt eines Lagers;
- Fig. 6: eine vergrößerte Schnittansicht eines elektrisch leitfähige Schichten aufweisenden Verschleißstifts an einem Außenlagerabschnitt eines Lagers;
- Fig. 7: eine perspektivische Ansicht eines Ruderkokers mit daran anzuordnendem Außenlagerabschnitt und
- Fig. 8: eine radiale Schnittansicht durch einen Abschnitt des Ruderkokers gemäß Fig. 7.

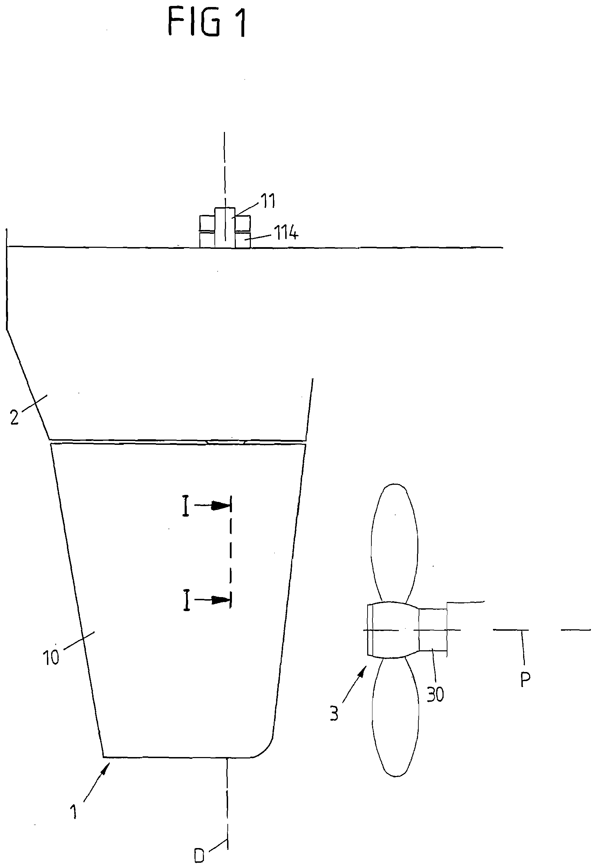

Fig. 1 zeigt ein Ruder 1 eines Schiffes, bei dem ein Ruderblatt 10 um eine Drehachse D drehbar an einem Schiffsrumpf 2 angeordnet ist. In an sich bekannter Weise ist das Ruderblatt 10 hierbei in Strömungsrichtung bei Vorausfahrt des Schiffes hinter einem an einem Propellerschaft 30 um eine Propellerachse P drehbaren Propeller 3 angeordnet und mit einem Ruderschaft 11 verbunden, der zum Verdrehen des Ruderblatts 10 ein Drehmoment in das Ruderblatt 10 einleitet und damit das Ruderblatt 10 zum Zwecke einer Kursänderung, Kurskorrektur oder Kursstabilisierung des Schiffes stellt.

An seinem oberen Ende wird der Ruderschaft 11 durch ein Traglager 114 gehalten, das den Ruderschaft 11 in axialer Richtung festlegt und über den Ruderschaft 11 das Ruderblatt 10 hält. Der Ruderschaft 11 ist zudem an seinem oberen Ende mit einer (nicht dargestellten) Rudermaschine verbunden, die zur Betätigung des Ruderblattes 10 Torsionskräfte in den Ruderschaft 11 einleitet und damit das Ruderblatt 10 stellt.

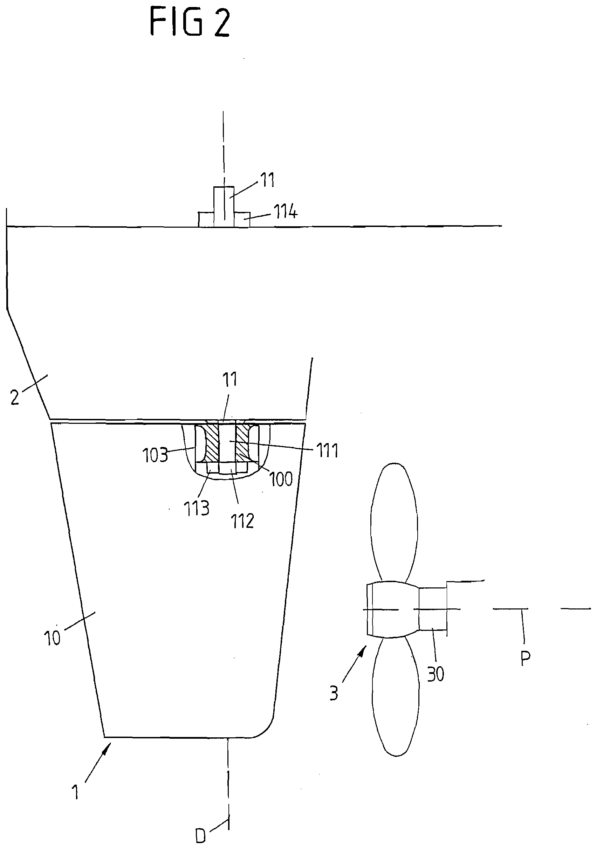

Bei einem in Fig. 2 in teilweise freigeschnittener Weise dargestellten Ausführungsbeispiel eines Ruders 1 ist der Ruderschaft 11 an seinem unteren Ende mit dem Ruderblatt 10 verbunden. Zur Verbindung mit dem Ruderblatt 10 weist der Ruderschaft 11 einen unteren konusförmigen Endabschnitt 111 auf, der in einem mit der inneren Rippenstruktur 103 des Ruderblattes 10 verschweißten massiven Verbindungsstück 100, auch bezeichnet als Ruderkloben, angeordnet ist und mit dem Verbindungsstück 100 einen Pressverbund bildet. Hierzu ist auf ein Gewindeende 112 des Ruderschaftes 11 eine Mutter 113 angesetzt, die einen pressenden Sitz des Endabschnitts 111 in dem Verbindungsstück 100 bewirkt.

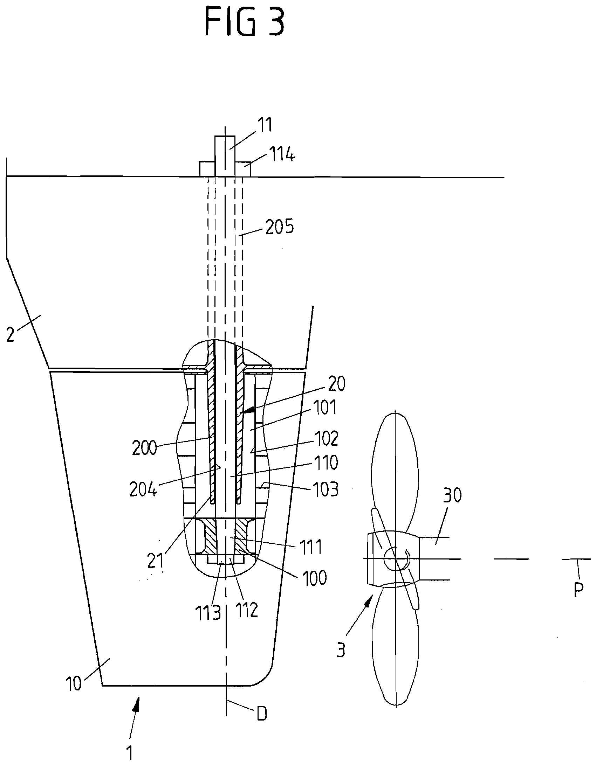

Wie beispielsweise von Ausführungsformen von Vollschweberudern bekannt, ist bei einem anderen, in Fig. 3 dargestellten Ruder 1 ein Ruderkoker 20 zur Lagerung des Ruderschafts 11 und/oder Ruderblattes 10 an dem Schiffsrumpf 2 vorgesehen. Der Ruderkoker 20 ist dabei gebildet durch ein nach Art eines Kragträgers vom Schiffsrumpf 2 vorstehendes, sich in eine Aussparung 101 im Ruderblatt 10 erstreckendes, unteres Kokerrohr 200 und ein oberes Kokerrohr 205, die einen Schaftabschnitt 110 des Ruderschafts 11 in einer inneren Bohrung 204 aufnehmen.

Das Ruderblatt 10 weist in seinem Inneren eine Rippenstruktur 103 auf, die die strukturelle Stabilität des Ruderblattes 10 gewährleistet. Die Aussparung 101 im Ruderblatt 10 zur Aufnahme des Kokerrohres 200 ist kastenförmig ausgebildet, erstreckt sich von der oberen, dem Schiffsrumpf 2 zugewandten Seite des Ruderblattes 10 in das Ruderblatt 10 hinein und ist über eine seitliche, wasserdicht verschweißte Beplankung 102 zum Inneren des Ruderblattes 10 hin abgedichtet.

Das Ruderblatt 10 kann ganz oder teilweise aus Stahl oder einem Kunststoffverbundstoff, insbesondere einem faserverstärkten Verbundstoff hergestellt sein.

Wie auch bei dem Ausführungsbeispiel gemäß Fig. 2 ist der Ruderschaft 11 bei dem Ruder gemäß Fig. 3 an seinem oberen Ende mit einer Rudermaschine und an seinem unteren Ende mit dem Ruderblatt 10 verbunden. Zur Verbindung mit dem Ruderblatt 10 weist der Ruderschaft 11 einen unteren konusförmigen Endabschnitt 111 auf, der in einem mit dem Ruderblatt 10 verschweißten Kloben 100 angeordnet ist und mit dem Kloben 100 einen Pressverbund bildet.

Bei den in Fig. 2 und Fig. 3 dargestellten Ausführungsbeispielen von Rudern 1 ist der Ruderschaft 11 über zumindest ein Lager 21 (siehe Fig. 3) am Schiffsrumpf 2 gelagert (bei dem Ausführungsbeispiel gemäß Fig. 3 an dem Ruderkoker 20). Denkbar und vorteilhaft ist dabei, mehrere Lager axial entlang des Ruderschafts 11 versetzt zueinander einzusetzen, oder alternativ oder zusätzlich das Ruderblatt 10 direkt am Schiffsrumpf 2, beispielsweise am Ruderkoker 20, zu lagern.

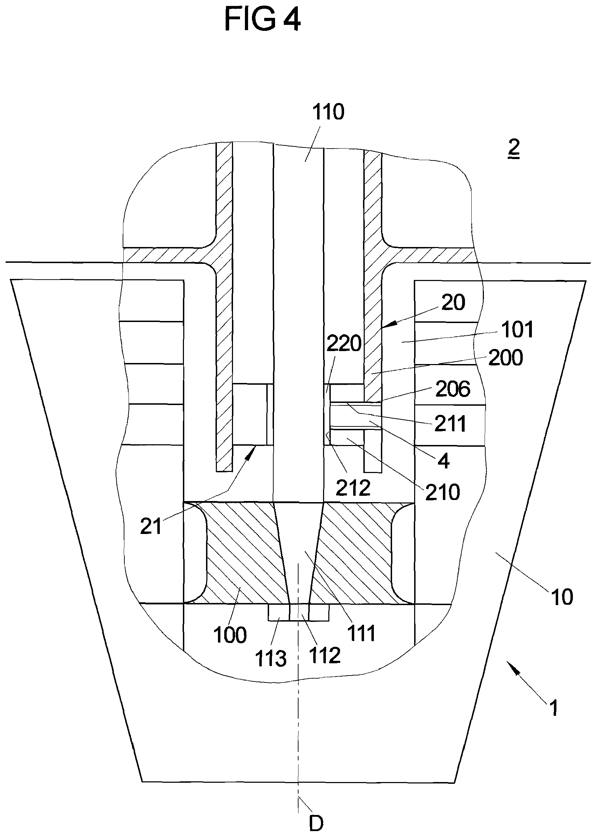

Fig. 4 zeigt in einer schematischen, vergrößerten Darstellung ein Ruder 1, bei dem der Schaftabschnitt 110 des Ruderschafts 11 über ein Lager 21 an einem Kokerrohr 200 eines am Schiffsrumpf 2 ausgebildeten Ruderkokers 20 gelagert ist. Das Lager 21 weist einen mit dem Kokerrohr 200 drehfest verbundenen, beispielsweise aus Bronze oder Kunststoff hergestellten Außenlagerabschnitt 210 nach Art einer Lagerbuchse und einen mit dem Schaftabschnitt 110 drehfest verbundenen, aus einem harten Material, beispielsweise Schmiedestahl hergestellten Innenlagerabschnitt 220 auf, die gleitend aneinander anliegen und ein Gleitlager mit radialer Abstützung zur Verfügung stellen.

Der Innenlagerabschnitt 220 kann auch einstückig mit dem Ruderschaft 11 ausgebildet sein, wobei der Ruderschaft 11 im Bereich des Innenlagerabschnitts 220 zusätzlich mit einer die Gleiteigenschaften vorteilhaft beeinflussenden Beschichtung versehen sein kann.

Über das Lager 21 ist der Schaftabschnitt 110 gegenüber dem Kokerrohr 200 in radialer Richtung abgestützt. Ein weiteres Lager kann axial versetzt in einem oberen Bereich des Ruderschaftes 110 vorgesehen sein.

Bei dem in Fig. 4 schematisch dargestellten Ausführungsbeispiel ist kein (zusätzliches) Lager zwischen dem Ruderblatt 10 und dem Kokerrohr 200 vorgesehen. Gleichwohl ist dies nicht beschränkend. Denkbar ist auch in dem in Fig. 4 dargestellten Ausführungsbeispiel, alternativ zum Lager 21 oder zusätzlich ein Lager zwischen der seitlichen Beplankung der Aussparung 101 des Ruderblattes 10 und dem Kokerrohr 200 vorzusehen.

Das in Fig. 4 im Schnitt schematisch dargestellte, aus dem Außenlagerabschnitt 210 und dem Innenlagerabschnitt 220 bestehende Lager 21 umschließt den Ruderschaft 110 ringförmig und stellt damit eine umfängliche, lagernde Abstützung für den Ruderschaft 110 zur Verfügung, wobei zur vereinfachten Montage sowohl der Außenlagerabschnitt 210 als auch der Innenlagerabschnitt 220 aus zwei Ringhälften zusammengesetzt sein können, die in einfacher Weise an den Ruderschaft 11 bzw. das Kokerohr 200 angesetzt werden können.

Am Außenlagerabschnitt 210 des Lagers 21 ist, wie aus Fig. 4 ersichtlich, ein Verschleißstift 4 vorgesehen, der in eine Bohrung 211 des Außenlagerabschnitts 210 eingesetzt ist und auch das Kokerrohr 200 an einer Aufnahmebohrung 206 durchdringt. Der Verschleißstift 4 ist im Wesentlichen zylindrisch ausgebildet und von außen derart in den Außenlagerabschnitt 210 eingesetzt, dass er gleitend mit dem Innenlagerabschnitt 220 in Anlage ist.

Der Verschleißstift 4 ist zumindest in seinem dem Innenlagerabschnitt 220 zugewandten Bereich aus dem gleichen Material wie der Außenlagerabschnitt 210 oder aus einem dem Außenlagerabschnitt 210 in seinen Materialeigenschaften ähnlichen Material hergestellt.

Dadurch, dass der Verschleißstift 4 genauso wie der Außenlagerabschnitt 210 an dem Innenlagerabschnitt 220 gleitend anliegt und aus demselben oder einem ähnlichen Material besteht, unterliegt er demselben Verschleiß wie der Außenlagerabschnitt 210. Durch Inspektion des Verschleißstifts 4 kann damit auf den Verschleiß des Außenlagerabschnitts 210 und des Lagers 21 insgesamt zurückgeschlossen werden.

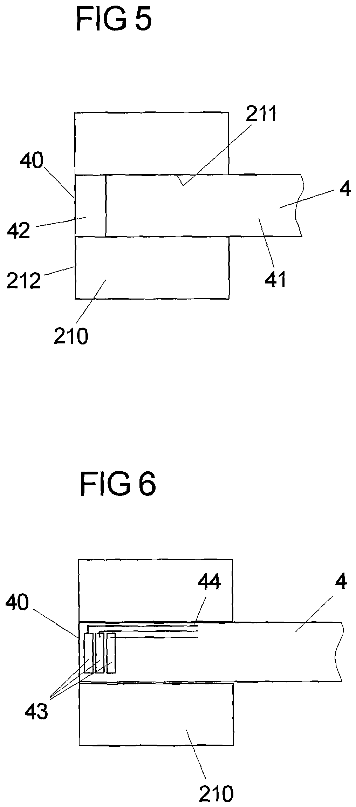

Fig. 5 und 6 zeigen in vergrößerten schematischen Ansichten Ausführungsbeispiele von unterschiedlichen Verschleißstiften 4 an einem Außenlagerabschnitt 210.

Bei dem Ausführungsbeispiel gemäß Fig. 5 weist der Verschleißstift 4 mindestens zwei Abschnitte 41, 42 auf, von denen zumindest der Abschnitt 42 aus demselben oder einem ähnlichen Material wie der Außenlagerabschnitt 210 ausgebildet ist. Der Abschnitt 42 liegt über eine Gleitfläche 40 an dem Innenlagerabschnitt 220 an und unterliegt damit im Betrieb des Ruders 1 denselben Beanspruchungen wie der Außenlagerabschnitt 210.

Bei dem Ausführungsbeispiel gemäß Fig. 6 sind an dem Verschleißstift 4 mehrere zueinander versetzte elektrisch leitfähige Schichten 43 angeordnet, die über Zuleitungen 44 mit einer am Ruderblatt 10 oder an Bord des jeweiligen Schiffes angeordneten Messvorrichtung verbunden sein können. Über die elektrisch leitfähigen Schichten 43 kann auf elektrische Weise auf den Verschleißzustand des Verschleißstifts 4 geschlossen werden, ohne dass der Verschleißstift 4 hierfür entnommen werden müsste. Beispielsweise kann eine Widerstandsmessung durchgeführt werden, wobei eine Änderung des Widerstands im Vergleich zu einer früheren Messung auf einen Abrieb am Verschleißstift 4 und damit auf einen Verschleiß des Lagers 21 hindeuten kann.

Der Verschleißstift 4 kann aus dem Außenlagerabschnitt 210 entnehmbar sein. Beispielsweise kann der Verschleißstift 4 in den Außenlagerabschnitt 210 eingeschraubt sein und zur Inspektion aus der Bohrung 211 geschraubt werden. Denkbar ist auch, den Verschleißstift 4 über eine Halterung nach Art eines Bajonettverschlusses an dem Außenlagerabschnitt 210 zu befestigen, um ein einfaches Lösen des Verschleißstifts 4 zu ermöglichen.

Bei dem Ausführungsbeispiel gemäß Fig. 5 ist ein Entnehmen des Verschleißstiftes 4 zur Inspektion und Prüfung erforderlich. Eine solche Prüfung kann beispielsweise durch einen Taucher vorgenommen werden.

Die Möglichkeit einer elektrischen Messung wie bei dem Ausführungsbeispiel gemäß Fig. 6 hat den Vorteil, dass auch im Betrieb bei Fahrt eines Schiffes Aussagen über den Verschleiß der Lager 21 eines Ruders erhalten werden können, ohne dass hierfür auf das Ruder 1 physisch zugegriffen werden müsste. Insbesondere ist eine Entnahme des Verschleißstiftes 4 und damit ein Zugriff auf das Ruder 1 nicht erforderlich.

Bei sämtlichen Varianten des Verschleißstifts 4 kann außenseitig am Verschleißstift 4 farblich eine Verschleißgrenze gekennzeichnet sein, so dass bei Entnahme des Verschleißstifts 4 sofort ersichtlich ist, ob eine Verschleißgrenze erreicht ist oder nicht.

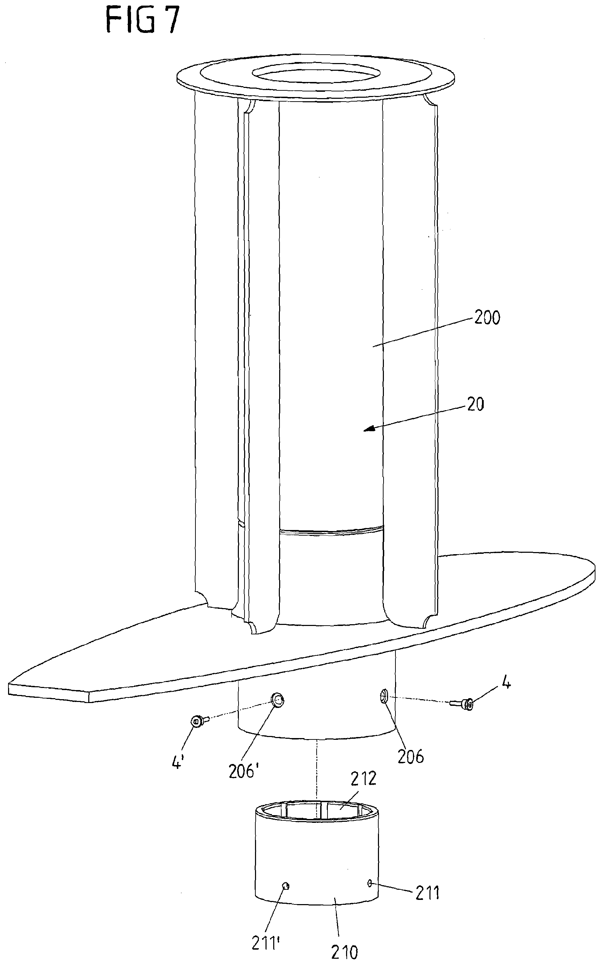

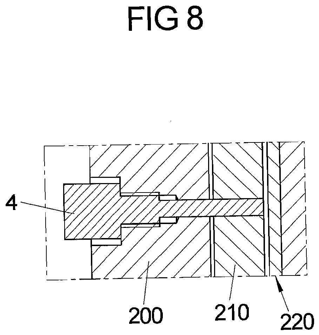

Fig. 7 und 8 zeigen in konkreter Ausgestaltung zwei an einem Kokerrohr 200 eines Ruderkokers 20 angeordnete, jeweils einen Außenlagerabschnitt 210 durchgreifende Verschleißstifte 4, 4'. Fig. 7 zeigt hier das Kokerrohr 200 mit dem Außenlagerabschnitt 210 nach Art einer Lagerbuchse und die Verschleißstifte 4, 4' in perspektivischer Darstellung, während Fig. 8 eine ausschnittsweise Schnittansicht durch einen Verschleißstift 4 darstellt.

Jeder Verschleißstift 4, 4' wird in eine Aufnahmebohrung 206, 206' am Kokerrohr 200 und in eine Bohrung 211, 211' an dem Außenlagerabschnitt 210 eingesetzt und steht, in montiertem Zustand gemäß Fig. 8, in gleitender Anlage am Innenlagerabschnitt 220 und ist denselben Beanspruchungen ausgesetzt wie der Außenlagerabschnitt 210.

Die Verschleißstifte 4, 4' sind in Umfangsrichtung um 90° zueinander versetzt an der Lagerbuchse (Außenlagerabschnitt 210) angeordnet, so dass mit den Verschleißstiften 4, 4' der Verschleiß an unterschiedlichen Orten des Lagers 21 ermittelt werden kann.

Der der Erfindung zugrundeliegende Gedanke ist nicht auf die vorangehend geschilderten Ausführungsbeispiele beschränkt, sondern kann grundsätzlich auch bei gänzlich anders gearteten Ausführungsformen Verwendung finden.

Insbesondere sind auch andere Lageranordnungen als die dargestellten denkbar und möglich. Beispielsweise kann ein Verschleißstift der geschilderten Art ebenso auch für ein zwischen einem Ruderblatt und einem Kokerrohr eingesetztes Lager verwendet werden.

Grundsätzlich denkbar ist auch die zusätzliche oder alternative Verwendung eines Verschleißstiftes an einem Innenlagerabschnitt, wobei hierfür aber Sorge getragen werden muss, dass der Verschleißstift gegebenenfalls zur Inspektion zugänglich und entnehmbar ist.

### Bezugszeichenliste

- 1: Ruder
- 10: Ruderblatt
- 100: Kloben
- 101: Aussparung
- 102: Beplankung
- 103: Rippenstruktur
- 11: Ruderschaft
- 110: Schaftabschnitt
- 111: Konusförmiger Endabschnitt
- 112: Gewindeende
- 113: Mutter
- 114: Axiallager
- 2: Schiffsrumpf
- 20: Ruderkoker
- 200: Kokerrohr
- 204: Bohrung
- 205: Oberes Kokerrohr
- 206, 206': Aufnahmebohrung
- 21: Lager
- 210: Außenlagerabschnitt
- 211, 211': Bohrung
- 212: Lagerfläche
- 220: Innenlagerabschnitt
- 3: Propeller
- 30: Propellerschaft
- 4,4': Verschleißstift
- 40: Gleitfläche
- 41,42: Abschnitt
- 43: Leitfähige Schichten
- 44: Zuleitungen
- D: Drehachse
- P: Propellerachse

## Patentansprüche

1. Ruder für Schiffe, mit
- einem um eine Drehachse (D) verschwenkbar an einem Schiffsrumpf (2) angeordneten Ruderschaft (11),
- einem mit dem Ruderschaft (11) verbundenen, um die Drehachse (D) zum Schiffsrumpf verschwenkbaren Ruderblatt (10) und
- mindestens einem Lager (21) zum Lagern des Ruderblattes (10) oder Ruderschafts (11) am Schiffsrumpf, wobei das Lager (21) einen Innenlagerabschnitt (220) und einen gleitend am Innenlagerabschnitt anliegenden Außenlagerabschnitt (210) aufweist,
**gekennzeichnet durch**
einen Verschleißstift (4, 4'), der an einem von dem Außenlagerabschnitt (210) und dem Innenlagerabschnitt (220) angeordnet ist und gleitend an dem anderen von dem Innenlagerabschnitt (220) und dem Außenlagerabschnitt (210) anliegt, wobei der Verschleißstift (4, 4') lösbar an dem einen von dem Außenlagerabschnitt (210) und dem Innenlagerabschnitt (220) angeordnet ist, indem der Verschleißstift (4, 4') in eine Bohrung (211, 211') des einen von dem Außenlagerabschnitt (210) und dem Innenlagerabschnitt (220) eingeschraubt ist.

2. Ruder nach Anspruch 1, **dadurch gekennzeichnet, dass** der Verschleißstift (4, 4') am Außenlagerabschnitt (210) angeordnet ist und eine Gleitfläche (40) aufweist, über die der Verschleißstift (4, 4') gleitend an dem Innenlagerabschnitt (220) anliegt.

3. Ruder nach Anspruch 2, **dadurch gekennzeichnet, dass** der Verschleißstift (4, 4') an seinem dem Innenlagerabschnitt (220) zugewandten Ende einen Abschnitt (42) aufweist, der aus dem gleichen Material wie der Außenlagerabschnitt (210) oder einem in seinen Materialeigenschaften dem Material des Außenlagerabschnitt (210) ähnlichen Material hergestellt ist.

4. Ruder nach einem der Ansprüche 1 bis 3, **dadurch gekennzeichnet, dass** der Verschleißstift (4,4') von der Außenseite des Lagers (21) oder Ruderblatts (10) zugänglich und von dem Lager (21) entnehmbar ist.

5. Ruder nach einem der vorangehenden Ansprüche, **dadurch gekennzeichnet, dass** an dem Verschleißstift (4, 4') im Bereich seines dem Innenlagerabschnitt (220) zugewandten Endes eine oder mehrere elektrisch leitfähige Schichten (43) zur Messung des Verschleißes des Verschleißstifts (4, 4') angebracht sind.

6. Ruder nach einem der vorangehenden Ansprüche, **dadurch gekennzeichnet, dass** an dem Außenlagerabschnitt (210) mehrere Verschleißstifte (4, 4') angeordnet sind.

7. Ruder nach einem der vorangehenden Ansprüche, **dadurch gekennzeichnet, dass** das mindestens eine Lager (21) als ausschließlich radiale Kräfte aufnehmendes Gleitlager ausgebildet ist.

8. Schiff mit einem Ruder nach einem der vorangehenden Ansprüche, **dadurch gekennzeichnet, dass** an einem Schiffsrumpf (2) des Schiffs ein Ruderkoker (20) ausgebildet ist, der sich mit einem einen Ruderschaft (11) aufnehmenden Kokerrohr (200) in eine Aussparung des Ruderblattes (10) erstreckt.

9. Schiff nach Anspruch 8, **dadurch gekennzeichnet, dass** der Innenlagerabschnitt (220) mit dem Ruderschaft (110) und der Außenlagerabschnitt (210) mit einem feststehenden Abschnitt (200) des Schiffsrumpfs (2) verbunden sind, um den Ruderschaft (110) an dem feststehenden Abschnitt (200) des Schiffsrumpfs (2) zu lagern.

10. Schiff nach Anspruch 8, **dadurch gekennzeichnet, dass** der Innenlagerabschnitt (220) mit einem feststehenden Abschnitt (200) des Schiffsrumpfs (2) und der Außenlagerabschnitt (210) mit dem Ruderblatt (10) verbunden sind, um das Ruderblatt (110) an dem feststehenden Abschnitt (200) des Schiffsrumpfs (2) zu lagern.

## Claims

1. A rudder for marine vessels, with
- a rudder shaft (11) arranged pivotably about an axis of rotation (D) on a marine vessel hull (2),
- a rudder blade (10) connected to the rudder shaft (11) and pivotable about the axis of rotation (D) with respect to the marine vessel hull, and
- at least one bearing (21) for mounting the rudder blade (10) or rudder shaft (11) on the marine vessel hull, wherein the bearing (21) having an inner bearing portion (220) and an outer bearing portion (210) slidably bearing against the inner bearing portion,
**characterized by**
a wearing pin (4, 4'), which is arranged on one of the outer bearing portion (210) and the inner bearing portion (220) and bears slidably against the other of the inner bearing portion (220) and the outer bearing portion (210), wherein the wearing pin (4, 4') is arranged releasably on the one of the outer bearing portion (210) and the inner bearing portion (220) in that the wearing pin (4, 4') is screwed into a bore (211, 211') of the one of the outer bearing portion (210) and the inner bearing portion (220).

2. The rudder as claimed in claim 1, **characterized in that** the wearing pin (4, 4') is arranged on the outer bearing portion (210) and has a sliding surface (40), via which the wearing pin (4, 4') bears slidably against the inner bearing portion (220).

3. The rudder as claimed in claim 2, **characterized in that** the wearing pin (4, 4') has, at its end facing the inner bearing portion (220), a portion (42) which is produced from the same material as the outer bearing portion (210) or from a material similar in its material properties to the material of the outer bearing portion (210).

4. The rudder as claimed in one of the claim 1 to 3, **characterized in that** the wearing pin (4, 4') is accessible from outside the bearing (21) or rudder blade (10) and can be removed from the bearing (21).

5. The rudder as claimed in one of the preceding claims, **characterized in that** one or more electrically conductive layers (43) for measuring the wear of the wearing pin (4, 4') are attached to the wearing pin (4, 4') in the region of its end facing the inner bearing portion (220).

6. The rudder as claimed in one of the preceding claims, **characterized in that** a plurality of wearing pins (4, 4') are arranged on the outer bearing portion (210).

7. The rudder as claimed in one of the preceding claims, **characterized in that** the at least one bearing (21) is designed as a plain bearing absorbing only radial forces.

8. A marine vessel with a rudder as claimed in one of the preceding claims, **characterized in that** a rudder post (20) is formed on a marine vessel hull (2) of the marine vessel and extends with a rudder post tube (200) receiving a rudder shaft (11) into a clearance of the rudder blade (10).

9. The marine vessel as claimed in claim 8, **characterized in that** the inner bearing portion (220) is connected to the rudder shaft (110) and the outer bearing portion (210) to a fixed portion (200) of the marine vessel hull (2) in order to mount the rudder shaft (110) on the fixed portion (200) of the marine vessel hull (2).

10. The marine vessel as claimed in claim 8, **characterized in that** the inner bearing portion (220) is connected to a fixed portion (200) of the marine vessel hull (2) and the outer bearing portion (210) to the rudder blade (10) in order to mount the rudder blade (110) on the fixed portion (200) of the marine vessel hull (2).

## Revendications

1. Gouvernail de bateau, avec
- une mèche de gouvernail (11) agencée au niveau d'une coque de bateau (2) de manière pivotante autour d'un axe de rotation (D),
- un safran de gouvernail (10) relié à la mèche de gouvernail (11), pivotant par rapport à la coque de bateau autour de l'axe de rotation (D) et
- au moins un palier (21) pour loger le safran de gouvernail (10) ou la mèche de gouvernail (11) au niveau de la coque de bateau, dans lequel le palier (21) présente une section de palier intérieure (220) et une section de palier extérieure (210) s'appuyant de manière coulissante sur la section de palier intérieure,
**caractérisé par**
une tige d'usure (4, 4'), qui est agencée au niveau d'une parmi la section de palier extérieure (210) et la section de palier intérieure (220) et s'appuie de manière coulissante sur l'autre parmi la section de palier intérieure (220) et la section de palier extérieure (210), dans lequel la tige d'usure (4, 4') est agencée de manière amovible au niveau de l'une parmi la section de palier extérieure (210) et la section de palier intérieure (220), par le fait que la tige d'usure (4, 4') est vissée dans un alésage (211, 211') de l'une parmi la section de palier extérieure (210) et la section de palier intérieure (220).

2. Gouvernail selon la revendication 1, **caractérisé en ce que** la tige d'usure (4, 4') est agencée au niveau de la section de palier extérieure (210) et présente une surface de glissement (40), via laquelle la tige d'usure (4, 4') s'appuie de manière coulissante sur la section de palier intérieure (220).

3. Gouvernail selon la revendication 2, **caractérisé en ce que** la tige d'usure (4, 4') présente au niveau de son extrémité tournée vers la section de palier intérieure (220) une section (42) qui est fabriquée à partir du même matériau que la section de palier extérieure (210) ou à partir d'un matériau aux propriétés de matériau similaires à celles du matériau de la section de palier extérieure (210).

4. Gouvernail selon l'une quelconque des revendications 1 à 3, **caractérisé en ce que** la tige d'usure (4, 4') est accessible du côté extérieur du palier (21) ou du safran de gouvernail (10) et peut être retirée du palier (21).

5. Gouvernail selon l'une quelconque des revendications précédentes, **caractérisé en ce qu'**une ou plusieurs couches électro-conductrices (43) sont montées au niveau de la tige d'usure (4, 4') dans la zone de son extrémité tournée vers la section de palier intérieure (220) pour la mesure de l'usure de la tige d'usure (4, 4').

6. Gouvernail selon l'une quelconque des revendications précédentes, **caractérisé en ce que** plusieurs tiges d'usure (4, 4') sont agencées au niveau de la section de palier extérieure (210).

7. Gouvernail selon l'une quelconque des revendications précédentes, **caractérisé en ce que** l'au moins un palier (21) est réalisé sous forme de palier lisse absorbant exclusivement des forces radiales.

8. Bateau avec un gouvernail selon l'une quelconque des revendications précédentes, **caractérisé en ce qu'**une jaumière de gouvernail (20) est réalisée au niveau d'une coque de bateau (2) du bateau, qui s'étend dans un évidement du safran de gouvernail (10) avec un tube de jaumière (200) logeant une mèche de gouvernail (11).

9. Bateau selon la revendication 8, **caractérisé en ce que** la section de palier intérieure (220) est reliée au safran de gouvernail (110) et la section de palier extérieure (210) est reliée à une section fixe (200) de la coque de bateau (2) pour loger le safran de gouvernail (110) au niveau de la section fixe (200) de la coque de bateau (2).

10. Bateau selon la revendication 8, **caractérisé en ce que** la section de palier intérieure (220) est reliée à une section fixe (200) de la coque de bateau (2) et la section de palier extérieure (210) est reliée au safran de gouvernail (10) pour loger le safran de gouvernail (110) au niveau de la section fixe (200) de la coque de bateau (2).
